# EUROPÄISCHE PATENTANMELDUNG

(11) **EP 2 549 078 A1**
(43) Veröffentlichungstag der Anmeldung: **23.01.2013**
(21) Anmeldenummer: 11174857.0
(22) Anmeldetag: 21.07.2011
(51) Int. Cl.: F02C 7/05, B01D 25/00, F02C 7/052

(54) **Ansaugkanal für Ansaugluft einer Gasturbine und Verfahren zum Betrieb einer stationären Gasturbine**

(71) Anmelder: Siemens Aktiengesellschaft, 80333 München (DE)
(72) Erfinder: Schneider, Oliver, Dr., 46487 Wesel (DE)

(57) **Zusammenfassung**

Die Erfindung betrifft einen Ansaugkanal (30) für Umgebungsluft einer stationären Gasturbine (10), mit zumindest einem im Ansaugkanal (30) angeordneten Filter (32, 34) zum Reinigen der durch den Ansaugkanal (30) strömbaren Umgebungsluft (A). Weiter betrifft die Erfindung ein Verfahren zum Betrieb einer stationären Gasturbine (10), welche mit einem Filter (32, 34) zur Säuberung der Umgebungsluft (A) ausgestattet ist. Um kurzfristig eine höhere Gasturbinenleistung einem Generator (20) zur Verfügung zu stellen, ist vorgesehen, dass mit Hilfe eines Bypasses oder mit Hilfe stromab der Filter (32, 34) angeordneten Klappen (36) zeitweise teilweise bis vollständig ungefilterte Umgebungsluft (A) in den Verdichtereingang (26) einströmen kann.

## Beschreibung

Die Erfindung betrifft einen Ansaugkanal für Ansaugluft einer stationären Gasturbine mit zumindest einem im Ansaugkanal angeordneten Filter zum Reinigen der durch den Ansaugkanal strömbaren Ansaugluft. Ferner betrifft die Erfindung ein Verfahren zum Betrieb einer stationären Gasturbine, welche mit einem Filter zur Reinigung der Ansaugluft ausgestattet ist.

Stationäre Gasturbinen sind üblicherweise mit im Ansaugkanal oder in einem Ansaughaus angeordneten Filtern ausgestattet, um die vom Verdichter angesaugte Umgebungsluft zu reinigen. Häufig sind dabei mehrere Filter hintereinander geschaltet, die die angesaugte Umgebungsluft, auch Ansaugluft genannt, anfänglich von gröberen Schmutzpartikeln und danach von kleineren Schmutzpartikeln befreit. Die Reinigung der Ansaugluft ist einerseits erforderlich, um Ablagerungen an den Verdichterschaufeln und damit einhergehende Alterungsprozesse des Verdichters zu vermeiden, welche zur Reduzierung des Verdichterwirkungsgrades und somit zur Reduzierung des Wirkungsgrades der Gasturbine führen würden. Gleichfalls ist es für die in der Turbine eingesetzten Heißgasbauteile erforderlich, dass besonders reine Kühlluft diesen zur Verfügung gestellt wird, da ansonsten auch dort Ablagerungen eine zuverlässige Kühlung der Bauteile gefährden könnte.

Weiter ist bekannt, dass stationäre Gasturbinen neben der zur unmittelbaren Stromerzeugung erforderlichen Energie auch häufig Leistungsreserven bereithalten müssen, um die im elektrischen Stromverteilungsnetz vorhandenen Schwankungen in Form von Änderungen der Netzfrequenz begrenzen zu können. Dabei ist es bekannt, dass zur sogenannten Frequenzstützung Leistungsreserven kurzfristig mobilisiert und bereit gestellt werden können, indem stromauf des Verdichtereingangs eine Flüssigkeit eingebracht wird, wodurch sich der Massenstrom und somit die Leistungsabgabe der Gasturbine kurzfristig und für eine kurze Zeitdauer erhöhen lässt. Dieses Verfahren ist als Frequenzstützung durch wet compression bekannt.

Weiter ist bekannt, bei Nennbetrieb der Gasturbine eine kurzzeitige Überfeuerung der Gasturbine durchzuführen und somit die Leistungsabgabe der Gasturbine auf einen Wert von über 100 % Nennlast anzuheben, um die erforderliche Netzstützung durchzuführen. Üblicherweise dauern solche ad hoc initiierten Frequenzstützungsmaßnahmen nicht länger als 15 Minuten, da währenddessen weitere Maßnahmen zur Stützung des Netzes eingeleitet und ergriffen werden, so dass die schnelle Reaktion - wet compression oder Überfeuerung - der laufenden Anlagen zurückgenommen werden kann.

Aufgabe der Erfindung ist die Bereitstellung eines alternativen Verfahrens, mit dem kurzfristig eine Erhöhung der abgegebenen Leistung der Gasturbine, beispielsweise zur Frequenzstützung durchgeführt werden kann. Weitere Aufgabe der Erfindung ist die Bereitstellung eines Ansaugkanals für eine Gasturbine, mit welchem ein derartiges Verfahren durchführbar ist.

Die auf die Vorrichtung gerichtete Aufgabe wird mit einem Ansaugkanal gemäß den Merkmalen des Anspruchs 1 gelöst. Die auf das Verfahren gerichtete Aufgabe wird mit einem Verfahren gemäß den Merkmalen des Anspruchs 3 gelöst. Vorteilhafte Ausgestaltungen der Erfindung sind in den Unteransprüchen angegeben.

Der Erfindung liegt die Erkenntnis zugrunde, dass während des Betriebs der Gasturbine aufgrund der Luftfilterung im Ansaugkanal ein Druckverlust entsteht. Dieser Druckverlust mindert die von der Gasturbine erbrachte Leistung und senkt deren Wirkungsgrad. Erfindungsgemäß ist nun vorgesehen, diesen Druckverlust kurzfristig und kurzzeitig zu eliminieren und somit eine Mehrleistung der Gasturbine dem angeschlossenen Generator zur Verfügung stellen können. Um dies zu erreichen, ist ein Bypass zum Umgehen des Filters bzw. der Filter und/oder mindestens eine stromab des Filters bzw. der Filter angeordnete verschließbare Öffnung in einer Wand des Ansaugkanals, vorzugsweise in Form von Klappen, zum Einlass von Umgebungsluft vorgesehen. Mit Hilfe des Bypasses bzw. der verschließbaren Öffnungen ist es möglich, dass in den zur Gasturbine zugehörigen Verdichter Umgebungsluft einströmt, welche zumindest teilweise, vorzugsweise jedoch vollständig ungefiltert ist. Mit dem Öffnen der Klappen bzw. des Bypasses ist es möglich, den leistungsmindernden Druckverlust an den Filtern zu eliminieren. Die abgegebene Leistung der Gasturbine erhöht sich dann durch Zugabe weiteren Brennstoffs, ohne dass dabei eine Überfeuerung auftritt. Ein die Lebensdauer der heißgasführenden Bauteile verkürzendes Überfeuern kann somit trotz gesteigerter Leistungsabgabe vermieden werden.

Dieses Verfahren wird vorzugsweise für den Fall der Frequenzstützung eingesetzt werden. Da jedoch die in der Umgebungsluft schwebenden Partikel dann in die Gasturbine einströmen, ist es von Vorteil, diese Betriebsphase der Gasturbine zeitlich zu begrenzen. Vorzugsweise ist dabei vorgesehen, dass der erfindungsgemäße Betrieb maximal eine vorbestimmte Zeitdauer, beispielsweise 15 Minuten, durchgeführt wird. Im Anschluss an diese Betriebsphase, d.h. unmittelbar daran oder kurzfristig danach - innerhalb der nächsten Stunde - wird vorzugsweise eine Wäsche des Verdichters durchgeführt. Bekanntermaßen wird dazu stromauf des Verdichters eine größere Menge einer tropfenförmigen Reinigungsflüssigkeit in den Ansaugkanal eingebracht, die dann in den Verdichter einströmen und dort die Beschaufelung des Verdichters von den sich während des ungefilterten Luftbetriebs ablagernde Partikel säubern kann. Hierdurch können die kurzzeitig auftretenden Alterungserscheinungen im Verdichter rückgängig gemacht werden.

Weitere Vorteile und Merkmale der Erfindung ergeben sich anhand eines in der Zeichnung dargestellten Ausführungsbeispiels.

Es zeigen:
- FIG 1, FIG 2: eine Seitenansicht eines Ansaugkanals mit in der Kanalwand angeordneten Klappen;
- FIG 3: ein Ablaufdiagramm des erfindungsgemäßen Verfahrens.

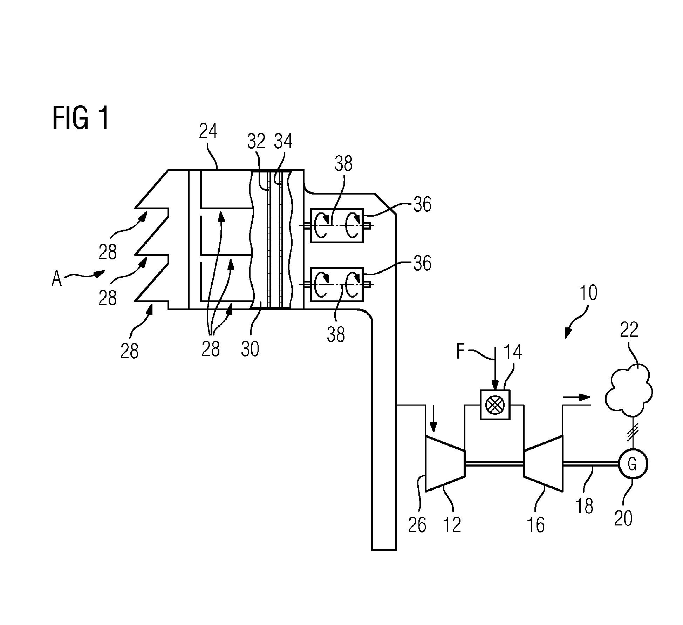

In FIG 1 ist schematisch eine stationäre Gasturbine 10 mit ihrem Verdichter 12, einer Brennkammer 14 und einer Turbineneinheit 16 gezeigt. Ein Rotor 18 der Gasturbine 10 ist an einen Generator 20 angeschlossen, welcher die von ihm erzeugte elektrische Energie in ein elektrisches Stromverteilungsnetz 22 einspeist.

In einem dem Verdichter 12 vorgeschalteten Ansaughaus 24 ist ein Ansaugkanal 30 vorgesehen, welcher Öffnungen 28 des Ansaughauses 24 mit dem Eingang 26 des Verdichters 12 verbindet. Gemäß dem gezeigten Ausführungsbeispiel sind im Ansaugkanal 30 zwei hintereinander geschaltete Filter 32, 34 vorgesehen. Es können auch mehr oder weniger Filter vorgesehen sein. Die Filter 32, 34 dienen zur Säuberung der angesaugten Umgebungsluft A von darin enthaltenen Schwebeteilchen und Partikeln.

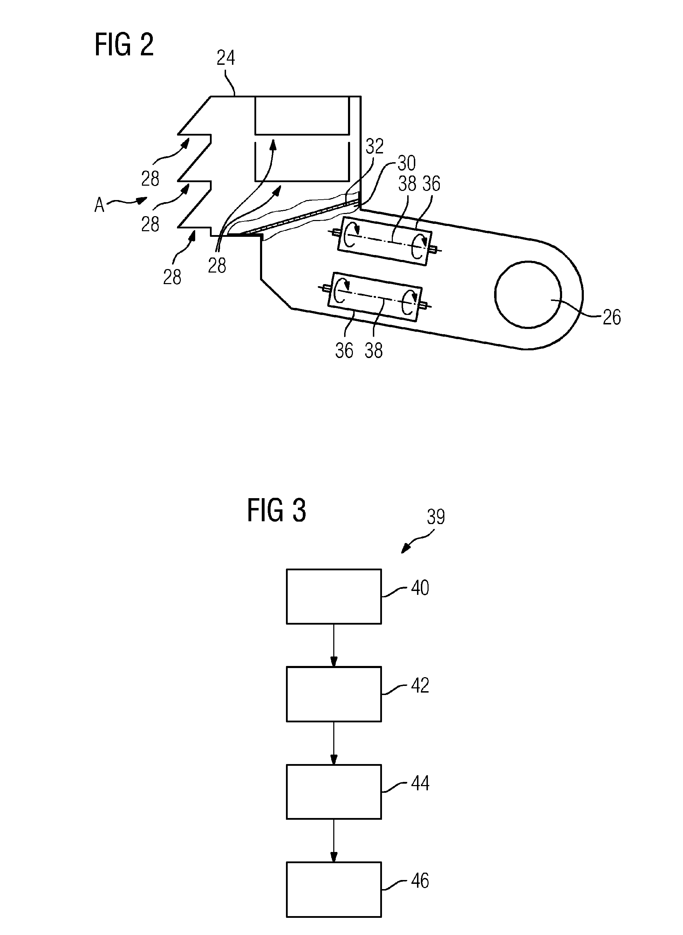

Stromab der Filter 32, 34 sind in einer Kanalwand des Ansaugkanals 30 als verschließbare Öffnungen mehrere, großflächige Klappen 36 vorgesehen, mit denen der Ansaugkanal 30 unmittelbar mit der Umgebung verbunden und davon getrennt werden kann, siehe auch FIG 2. Dazu sind die Klappen 36 um eine Längsachse 38 schwenkbar gelagert. Eine zugehörige Antriebseinheit zum Schwenken der Klappen 36, d.h. zum Öffnen und Schließen der Klappen 36 ist nicht dargestellt.

Weiterhin können grobe Schutzgitter (nicht dargestellt) ohne Druckverlust vor den Klappen 36 bzw. an den Öffnungen 28 vorgesehen sein. Diese schützen davor, dass größere Gegenstände oder Vogelgetier in den Ansaugkanal 30 gelangen können. Insgesamt sind die Klappen 36 so angeordnet, dass die Durchströmung der durch den immer noch vorhandenen Filter 32, 34 nicht gestört wird.

Die in den Figuren 1 und 2 dargestellten Ausführungsbeispiele unterscheiden sich darin, dass einerseits die Anordnung für eine fluchtende (FIG 1) und eine seitliche Aufstellung (FIG 2) des Ansaughauses 24 an der Gasturbine 10 möglich ist.

Während des üblichen Gasturbinen-Betriebs sind die Klappen 36 geschlossen und der Verdichter 12 saugt durch die Öffnungen 28 Umgebungsluft A in den Ansaugkanal 30 ein. Diese passiert die Filter 32, 34 und wird währenddessen zuerst von größeren, danach von kleineren Schwebeteilchen und Partikel befreit. Danach strömt die gefilterte Ansaugluft weiter durch den Ansaugkanal 30 zum Einlass 26 des Verdichters 12 und wird dann in bekannter Manier verdichtet und in der Brennkammer 14 mit Brennstoff F verbrannt.

Das Verfahren 39 zur Leistungserhöhung ist in FIG 3 dargestellt. In einem ersten Schritt 40 wird eine Anforderung mehr Leistung als bisher an den Generator 20 abzugeben an einen Gasturbinenregler gestellt. Dies kann beispielsweise der Fall sein, wenn vom Stromverteilungsnetz 22 die Netzfrequenz absinkt und somit ein Frequenzstützungsereignis vorliegt. In diesem Fall steuert dann in einem zweiten Schritt 42 der Regler die Antriebseinheit, um die Klappen 36 zu öffnen. Dadurch kann zumindest teilweise oder gar vollständig ungefilterte Umgebungsluft A in den Verdichtereingang 26 der Gasturbine 10 einströmen. Durch das Öffnen der Klappen 36 umgeht die Umgebungsluft Filter 32, 34, was auch als Bypassung bezeichnet wird. Dann ist die Gasturbine 10 in der Lage, ohne Überfeuerung oder wet compression eine Mehrleistung abzugeben. In einem dritten Verfahrensschritt 44 werden die Klappen 36 wieder geschlossen, wodurch die vom Verdichter 12 angesaugte Umgebungsluft A nun zwingend durch die Filter 32, 34 strömen muss. Die Schließung der Klappen 36 bzw. der dritte Verfahrensschritt 44 kann einerseits durch die Beendigung des Frequenzstützungsereignisses bzw. -anforderung ausgelöst werden. Alternativ können die Klappen 36 auch nach einem Ablauf der Höchstbetriebszeit der ungefilterten Ansaugung von Umgebungsluft geschlossen werden. Gemäß einem vierten, optionalen Schritt 46 wird unmittelbar oder zeitnah nach dem Schließen der Klappen 36 eine Verdichterwäsche durchgeführt. Die Verdichterwäsche kann als Online-Wäsche oder als Offline-Wäsche durchgeführt werden.

Prinzipiell besteht die Erfindung darin, für kurzfristige Betriebszustände, wie etwa der Netzstützungsbetrieb, die Ansaugverluste einer stationären Gasturbine 10 durch einen Bypass zu minimieren und damit die Gasturbinenleistung anzuheben. Durch die Einfachheit der erfindungsgemäßen Maßnahme entstehen nur geringe Mehrkosten bei der Installation und auch bei der Wartung der Klappen 36, wohingegen der wirtschaftliche Nutzen der mit der Erfindung ausgestatteten Gasturbine 10 signifikant erhöht wird.

Anstelle der Klappen 36 können selbstverständlich auch andere Organe wie verschiebliche Fenster oder dergleichen vorgesehen sein.

Insgesamt betrifft die Erfindung somit einen Ansaugkanal 30 für angesaugte Umgebungsluft einer stationären Gasturbine 10, mit zumindest einem im Ansaugkanal 30 angeordneten Filter 32, 34 zum Reinigen der durch den Ansaugkanal 30 strömbaren Ansaugluft A. Weiter betrifft die Erfindung ein Verfahren zum Betrieb einer stationären Gasturbine 10, welche mit einem Filter 32, 34 zur Säuberung der Ansaugluft A ausgestattet ist. Um kurzfristig eine höhere Gasturbinenleistung einem Generator 20 zur Verfügung zu stellen, ist vorgesehen, dass mit Hilfe eines Bypasses oder mit Hilfe stromab der Filter 32, 34 angeordneten Klappen 36 zeitweise teilweise bis vollständig ungefilterte Umgebungsluft A in den Verdichtereingang 26 einströmen kann. Dadurch werden die aufgrund der Filter 32, 34 hervorgerufenen Druckverluste kurzfristig eliminiert.

## Patentansprüche

1. Ansaugkanal (30) für Ansaugluft (A) einer stationären Gasturbine (10),
mit zumindest einem im Ansaugkanal (30) angeordneten Filter (32, 34) zum Reinigen der durch den Ansaugkanal (30) strömbaren Ansaugluft (A),
**dadurch gekennzeichnet, dass**
ein Bypass zum Umgehen des Filters (32, 34) bzw. der Filter (32, 34) und/oder mindestens eine stromab des Filters (32, 34) angeordnete verschließbare Öffnung in einer Wand des Ansaugkanals (30) zum Einlass von Umgebungsluft (A) vorgesehen ist.

2. Ansaugkanal (30) nach Anspruch 1,
bei dem die verschließbaren Öffnungen als Klappen (36) ausgebildet sind.

3. Verfahren (39) zum Betrieb einer stationären Gasturbine (10), welche mit zumindest einem Filter (32, 34) zur Reinigung einer Ansaugluft (A) ausgestattet ist,
**dadurch gekennzeichnet, dass**
zeitweise teilweise bis vollständig ungefilterte Umgebungsluft (A) in die stationäre Gasturbine (10) einströmt.

4. Verfahren (39) nach Anspruch 3,
welches zur Frequenzstützung und/oder zur Erhöhung der abgegeben Leistung der Gasturbine (10) durchgeführt wird.

5. Verfahren (39) nach Anspruch 3 oder 4,
bei dem maximal für eine vorbestimme Zeitdauer ungefilterte Umgebungsluft (A) einströmt.

6. Verfahren (39) nach Anspruch 3, 4 oder 5,
bei dem nach der Beendigung der Ansaugung ungefilteter Umgebungsluft A eine Wäsche des Verdichters (12) durchgeführt wird.
